# FASCICULE DE BREVET EUROPEEN

(11) **EP 0 518 746 B1**
(45) Date de publication et mention de la délivrance du brevet: **20.03.1996**
(21) Numéro de dépôt: 92401580.3
(22) Date de dépôt: 09.06.1992
(51) Int. Cl.: F27D 5/00, C04B 41/50

(54) **Dispositif de chargement pour soutenir des pièces à l'intérieur d'un four**
Beschickungsanlage für das Tragen von Werkstücken in Ofen
Charging device for supporting workpieces inside a furnace

(30) Priorité: 11.06.1991 FR 9107092
(43) Date de publication de la demande: 16.12.1992
(73) Titulaire: SOCIETE EUROPEENNE DE PROPULSION, F-92150 Suresnes (FR)
(72) Inventeur: Maumus, Jean-Pierre, F-33150 Cenon (FR); Martin, Guy, F-33160 Saint Aubin de Medoc (FR); Camelot, Claude, F-33127 Martignas (FR); Noguez, Pierre Jean, F-33160 Saint Medard en Jalles (FR)
(74) Mandataire: Joly, Jean-Jacques

(56) Documents cités:
- DE-A- 1 950 066
- FR-A- 2 586 093
- GB-A- 1 168 505
- GB-A- 2 053 873
- US-A- 2 537 145
- US-A- 2 871 543
- US-A- 4 487 579

## Description

La présente invention concerne un dispositif de chargement pour soutenir des pièces à l'intérieur d'un four.

Le domaine d'application de l'invention est plus particulièrement celui des fours destinés au traitement de pièces métalliques sous vide ou en atmosphère non oxydante, à des températures relativement élevées, pouvant atteindre 1300° C. De tels fours peuvent être utilisés pour réaliser sur des pièces des opérations de carbonisation, dépôt chimique en phase vapeur, traitement thermique ou brasage.

Des fours de ce type sont constitués principalement d'une structure isolée, de moyens de chauffage et d'un dispositif de chargement. Ce dernier est généralement formé de plusieurs plateaux, ou soles, maintenus espacés les uns des autres par des entretoises et reposant sur la structure de fond du four. Les pièces à traiter ou à braser sont placées sur les soles éventuellement avec des outillages de maintien.

Les soles sont habituellement en graphite ou métalliques.

Les soles en graphite sont très épaisses, très fragiles et très lourdes. Elles occupent une proportion importante du volume interne du four, ce qui limite d'autant la place disponible pour les pièces.

Les soles métalliques, généralement en acier réfractaire sont aussi très épaisses et très lourdes. Hormis leur moindre fragilité, elles présentent donc les mêmes inconvénients que les soles en graphite. De plus, les soles métalliques ont une grande inertie thermique et sont sujettes à des déformations qui nécessitent des opérations régulières de surfaçage ou rectification.

Pour éviter ces inconvénients, il a été proposé d'utiliser des soles en matériau composite thermostructural, en particulier en matériau composite carbone/carbone (C/C).

Les matériaux composites thermostructuraux, comme les composites C/C ou les composites à matrice céramique (CMC) (voir FR-A- 2 586 093), sont caractérisés par d'excellentes propriétés mécaniques et par la capacité de conserver ces propriétés mécaniques ainsi que leur géométrie à des températures élevées. Ainsi, les soles en matériau composite C/C peuvent être réalisées avec une épaisseur bien inférieure à celle des soles en graphite. Elles sont donc plus légères et occupent une fraction moins importante du volume interne du four. De plus, les soles en matériau composite C/C ont un comportement thermique voisin de celui des soles en graphite. Il en résulte, en particulier en comparaison avec les soles métalliques, une amélioration des cycles d'utilisation du four.

Toutefois, les dispositifs de chargement connus utilisent des soles en matériau composite C/C présentent encore des inconvénients. Ainsi, il a été observé que des pièces en acier (pièces à traiter ou à braser, ou outillages) sont sujettes à un phénomène de carburation par contact avec la sole en composite C/C. En outre, dans le cas de brasage de pièces, la brasure qui peut couler des pièces adhère à la sole en composite C/C, cette adhésion pouvant se traduire quasiment par un brasage des pièces sur la sole.

L'invention a pour but de fournir un dispositif de chargement ne présentant pas les inconvénients précités des dispositifs de l'art antérieur.

En particulier, l'invention a pour but de fournir un dispositif de chargement comprenant au moins une sole en matériau composite thermostructural selon le préambule de la revendication 1, tout en évitant les problèmes de composite thermostructural tout en évitant les problèmes de carburation ou d'adhésion de brasure rencontrés avec les soles connues en composite C/C.

Ce but est atteint avec un dispositif de chargement dans lequel, conformément à l'invention, la sole en matériau composite thermostructural est revêtue, au moins sur la surface destinée à être en contact avec les pièces, par une couche de carbone pyrolitique, ou pyrocarbone.

Il a été mis en évidence, et ce de façon inattendue, que les phénomènes de carburation et d'adhésion de brasure observés avec des soles en matériau composite C/C ne se produisent pas avec des soles en matériau composite thermostructural revêtues d'une couche de pyrocarbone.

Le pyrocarbone est formé sur la sole par dépôt chimique en phase vapeur après usinage de la surface de la sole. L'épaiseur de la couche de pyrocarbone est de préférence au moins égale à 25 microns.

La ou chaque sole constituant le dispositif de chargement peut être formée de plusieurs parties, ou secteurs, juxtaposés. Le revêtement de pyrocarbone est réalisé de préférence sur les secteurs, avant leur assemblage.

Le dispositif de chargement comprend au moins une sole de base qui prend appui sur la structure de fond du four par l'intermédiaire de pieds reliés entre eux par des barrettes afin de constituer une structure de support rigide.

Lorsque le dispositif de chargement comprend plusieurs soles placées à différents niveaux, celles-ci sont espacées les unes des autres au moyen d'entretoises. Les entretoises sont réalisées avantageusement en matériau composite thermostructural, et sont revêtues par une couche de pyrocarbone.

Un autre mode particulier de réalisation de l'invention sera maintenant décrit en référence aux dessins annexés sur lesquels :
- la figure 1 est une vue très schématique en élévation et en coupe d'un four muni d'un dispositif de chargement conforme à l'invention,
- la figure 2 est une vue partielle en perspective du dispositif de chargement de la figure 1, comprenant une sole de base et plusieurs soles intermédiaires,
- la figure 3 est une vue de dessous du dispositif de support de la sole de base dans le four de la figure 1,
- la figure 4 est une vue en coupe, à échelle agrandie, montrant des détails d'un mode de liaison entre la sole de base et un pied de sa structure de support, et entre la sole de base et une entretoise, et
- la figure 5 est une vue en coupe, à échelle agrandie, montrant des détails d'un autre mode de liaison entre la sole de base et un pied de sa structure de support.

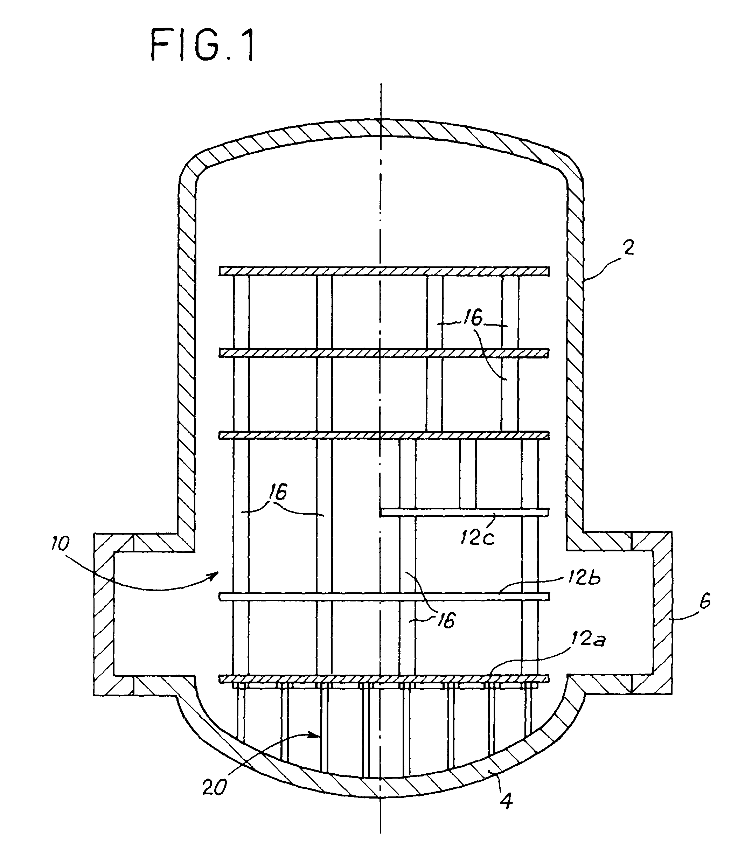

La figure 1 illustre très schématiquement un four à chargement par le bas utilisable par exemple pour réaliser des opérations de traitement thermique de pièces métalliques sous vide.

Le four comprend une enceinte isolée 2 avec une structure de fond 4 mobile verticalement. L'intérieur du four est accessible à sa base 6 pour charger les pièces à traiter sur un dispositif de chargement 10 qui est supporté par la structure de fond du four par l'intermédiaire d'une structure de support 20.

Le dispositif de chargement 10 comprend plusieurs soles 12a, 12b, 12c, ... disposées à différents niveaux et espacées les unes des autres par des entretoises. La sole inférieure, ou sole de base 12a, repose sur la structure de fond du four par l'intermédiaire d'une structure de support 20.

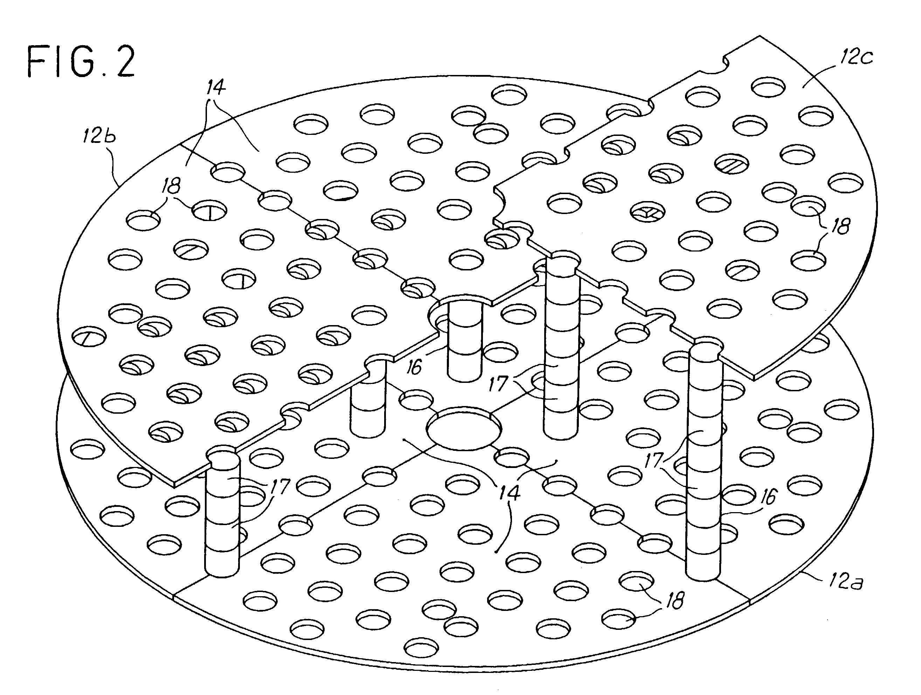

La figure 2 montre une partie du dispositif de chargement, à savoir la sole de base 12a et les soles 12b et 12c qui sont situées immédiatement au-dessus. L'espacement entre les soles est réglé au moyen des entretoises 16 qui sont avantageusement constituées par des éléments d'entretoise identiques 17 mis bout à bout.

Afin de réaliser un chargement optimum du four, l'espacement entre les soles est réglé, en formant les entretoises par le nombre voulu d'éléments 17, en fonction de la hauteur des pièces à traiter. Lorsque les pièces disposées sur une même sole sont de hauteurs différentes, des soles intermédiaires partielles pourront être mises en place au-dessus des pièces de plus petite hauteur. Par exemple, comme le montre la figure 2, alors que la sole de base 12a est circulaire, la sole 12b a une forme de demi-cercle et la sole 12c une forme de quart de cercle. Les entretoises séparant les soles 12a et 12c ont alors une longueur supérieure à celles séparant les soles 12a et 12b.

Avantageusement, les soles sont formées à partir d'éléments standards tels que des secteurs 14. Ceux-ci sont par exemple en forme de quart de cercle. La sole de base 12a est alors formée de quatre secteurs 14, tandis que les soles 12b et 12c sont formées respectivement de deux secteurs 14 et un secteur 14.

Ainsi, le dispositif de chargement 10 comprenant les soles et les entretoises peut être assemblé en fonction des besoins, pour assurer le remplissage optimum du four, à partir d'éléments de sole et d'éléments d'entretoise standards. La constitution du dispositif de chargement est réalisée, au fur et à mesure de l'installation des pièces à traiter, de bas en haut, en partant de la sole de base 12a. La structure de fond du four peut être mobile verticalement afin d'être déplacée progressivement vers le bas, au fur et à mesure du chargement, et d'être ensuite ramenée en position supérieure lorsque le chargement est terminé.

Comme le montre également la figure 2, les soles du dispositif de chargement sont percées régulièrement de trous 18. Ceux-ci ont principalement pour objet, pour un four de traitement thermique sous vide, de faciliter la mise sous vide. Dans un four destiné à la réalisation d'opérations d'infiltration ou dépôt chimique en phase vapeur, les trous 18 sont également nécessaires pour assurer la diffusion dans tout le volume du four du flux gazeux utilisé pour l'infiltration ou le dépôt. D'une façon générale, les trous 18 permettent aussi dans tous les cas d'alléger le dispositif de chargement. En outre, certains trous 18 sont utilisés pour assurer la liaison des soles avec les entretoises et la liaison de la sole de base avec la structure de support 20.

Conformément à l'invention, les soles du dispositif de chargement 10 sont réalisées en un matériau composite thermostructural et revêtues d'une couche de pyrocarbone au moins sur leurs surfaces destinées à être en contact avec les pièces.

Le matériau composite thermostructural constitutif des soles peut être un composite carbone/carbone (C/C) ou un composite à matrice céramique (CMC).

Un composite C/C est constitué par un renfort fibreux en carbone densifié par une matrice en carbone. Le renfort fibreux est par exemple formé de strates bidimensionnelles, telles que des couches de tissu, superposées. Les strates peuvent être liées entre elles par introduction de fils transversalement aux strates ou par aiguilletage. La densification par la matrice carbone est réalisée par voie liquide ou par voie gazeuse. La densification par voie liquide consiste à imprégner le renfort fibreux par un précurseur du carbone, par exemple une résine qui est ensuite polymérisée et pyrolysée ; plusieurs cycles consécutifs d'imprégnation-polymérisation-pyrolyse sont généralement effectués pour atteindre le degré de densification souhaité. La densification par voie gazeuse, ou infiltration chimique en phase vapeur, consiste à disposer le renfort fibreux, éventuellement maintenu en forme par un outillage, dans un four dans lequel une phase gazeuse est admise dans des conditions de température et de pression telles que la matrice se forme par décomposition de la phase gazeuse ou réaction entre les constituants de celle-ci au contact des fibres du renfort. Une matrice carbone est obtenue par infiltration chimique en phase vapeur en utilisant généralement une phase gazeuse contenant un ou plusieurs hydrocarbures.

Un CMC est constitué par un renfort en fibres réfractaires (fibres carbone ou fibres céramique) densifié par une matrice céramique. Le matériau céramique de la matrice et, éventuellement, des fibres du renfort est par exemple le carbure de silicium (SiC). Comme précédemment, le renfort fibreux peut être formé de strates bidimensionnelles superposées et la densification par la matrice céramique peut être réalisée par voie liquide ou par voie gazeuse. A titre d'exemple, un procédé d'infiltration en phase vapeur de carbure de silicium est décrit dans le document FR 2 401 888.

Le revêtement des soles par la couche de pyrocarbone est réalisé de façon classique par dépôt chimique en phase vapeur. Ce procédé conduit à la formation d'un revêtement pyrocarbone sur toute les surfaces extérieures des soles. Il serait possible de ne former le revêtement pyrocarbone que sur les surfaces des soles destinées à être en contact avec les pièces chargées dans le four, par exemple en masquant les autres surfaces.

Le revêtement de pyrocarbone a une épaisseur suffisante pour ne pas risquer d'être endommagé par les pièces. Cette épaisseur est de préférence au moins égale à 25 microns. En pratique, il ne paraît pas utile de dépasser une épaisseur de 250 microns. A titre indicatif, un revêtement de pyrocarbone ayant une épaisseur d'environ 100 microns convient parfaitement.

En pratique, on réalise des plaques de matériau composite thermostructural dans lesquelles les secteurs de sole 14 sont découpés. Les secteurs de sole sont soumis à une opération d'usinage afin de corriger les défauts de surface. Cette opération de rectification, ou surfaçage, met à nu en surface les fibres de la texture de renfort. Avantageusement, le revêtement de pyrocarbone est ensuite formé sur les secteurs de sole, avant assemblage de ceux-ci. Un revêtement de pyrocarbone est également formé dans les mêmes conditions sur les éléments d'entretoise.

Au bout d'une certaine durée d'utilisation, un "rechapage" des secteurs de sole est possible en procédant à une rectification de surface et à un nouveau dépôt d'une couche de pyrocarbone.

Ainsi, dans le système de chargement constitué par les soles et les entretoises, les pièces ne peuvent venir au contact que de surfaces revêtues de pyrocarbone. Il a pu être vérifié, dans le cas de pièces ou d'outillages en acier, que la présence du pyrocarbone n'amenait aucun phénomène de carburation. En outre, dans le cas de brasage de pièce, il a été observé que la brasure coulant éventuellement sur les soles n'adhère pas ou que très peu au revêtement de pyrocarbone.

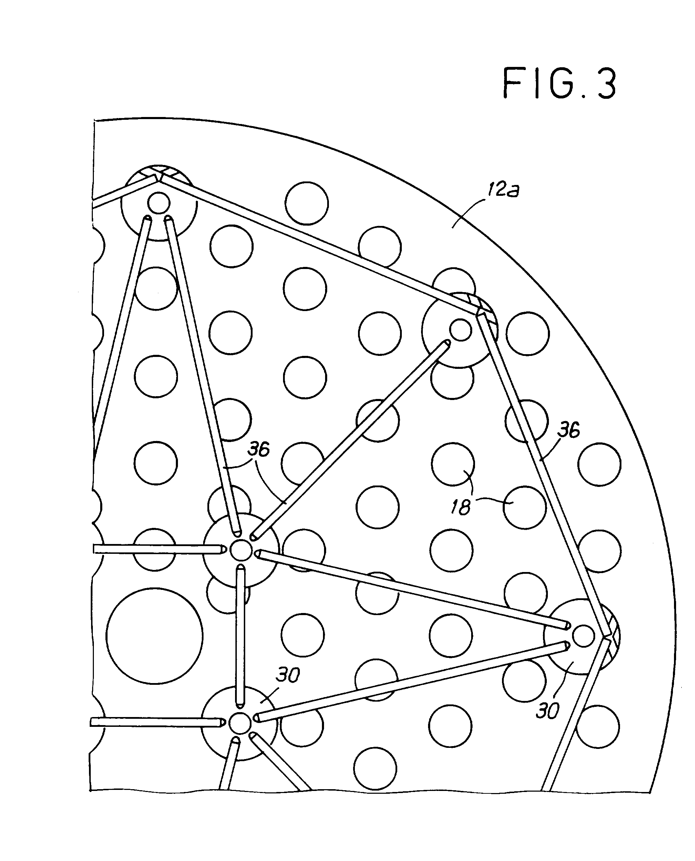

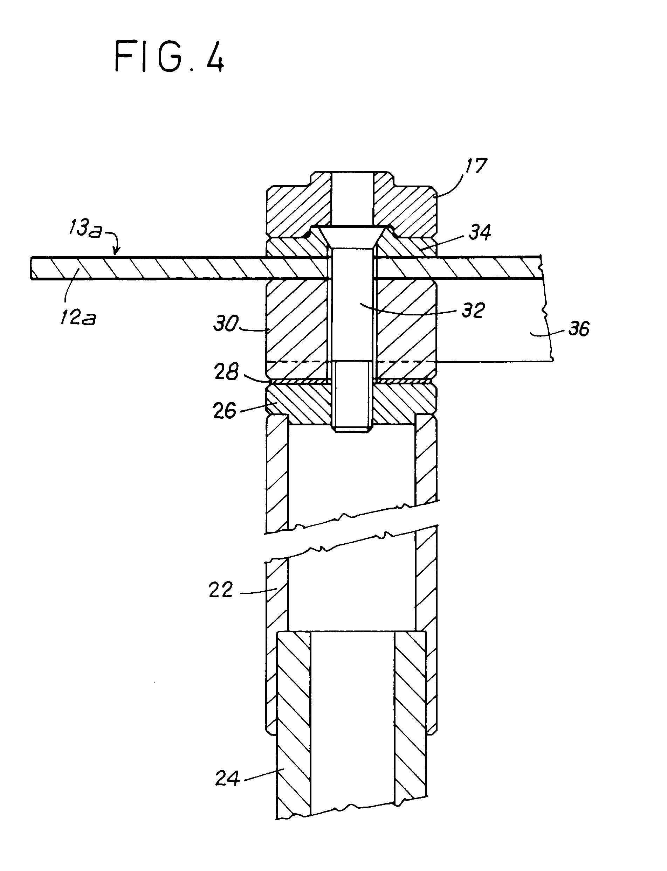

Un mode de réalisation de la structure de support 20 soutenant la sole de base 12a sera maintenant décrit en référence aux figures 3 et 4.

Des pieds tubulaires 22 en matériau composite thermostructural sont emmanchés à leur extrémité inférieure sur des plots 24, par exemple métalliques, fixés à la structure de fond du four. A leur extrémité supérieure, les pieds 22 sont fermés par des capuchons 26 collés sur les pieds. La sole de base 12a repose sur les capuchons 26 par l'intermédiaire de cales d'épaisseurs 28 disposées sur ceux-ci et de noyaux 30. Pour chaque pied 22, une vis 32, passant à travers le noyau 30 et la cale d'épaisseur 28, est vissée dans le capuchon 26. La tête de la vis 32 s'appuie sur la face supérieure de la sole par l'intermédiaire d'une rondelle 34. Les capuchons 26, cales 28, noyaux 30 et rondelles 34 sont en matériau composite thermostructural tandis que les vis 32 sont en métal réfractaire. On a représenté en 13a la couche de pyrocarbone formée sur la sole de base 12a.

Les noyaux 30 sont munis de logements borgnes horizontaux dans lesquels sont engagées à force les extrémités de barrettes de liaison 36. Celles-ci relient les noyaux entre eux afin de former un réseau de rigidification donnant la tenue nécessaire à la structure de support. Les barrettes 36 sont en matériau composite thermostructural.

Chaque rondelle 34 présente une partie centrale en saillie afin de permettre l'emboîtement d'un élément d'entretoise 17 formant l'élément inférieur d'une entretoise déterminant l'espacement entre la sole de base et une sole supérieure. Chaque élément d'entretoise 17 comprend une partie centrale en saillie à sa partie supérieure et un logement central à sa partie inférieure. De la sorte, une entretoise ayant une longueur désirée est formée simplment en emboîtant successivement le nombre voulu d'éléments d'entretoise.

La structure de support 20 permet d'installer sans difficultés un système de chargement conforme à l'invention dans des fours existants. Avec les cales d'épaisseur 28, il est possible de compenser d'éventuels défauts géométriques pour assurer la planéité et l'horizontalité de la sole de base.

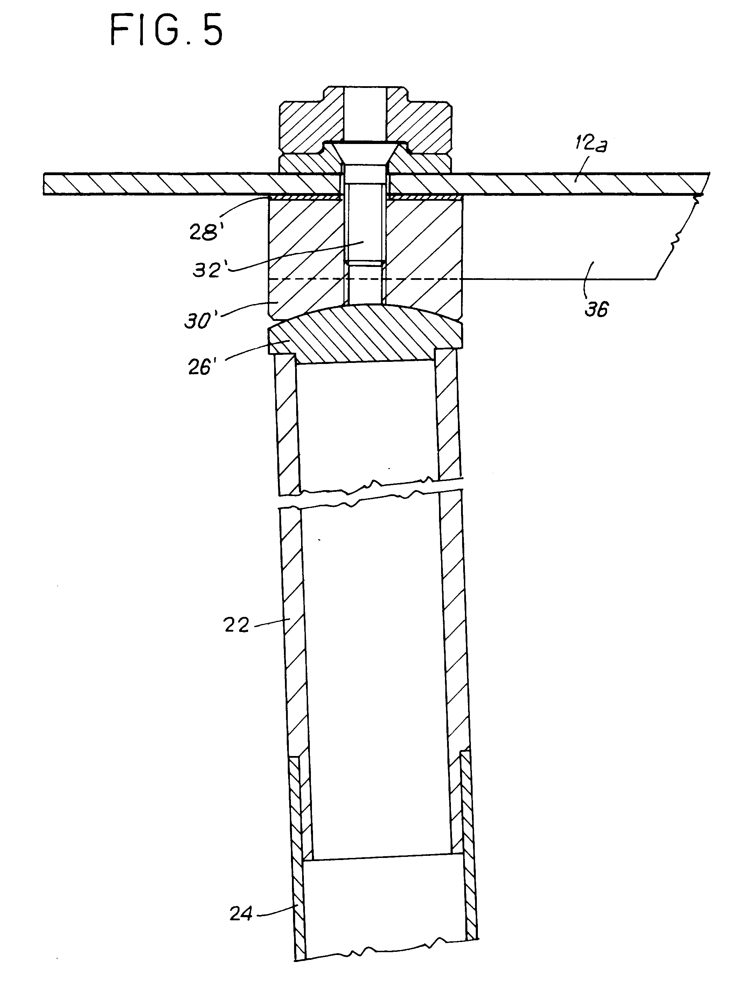

Dans le cas où les axes des plots 24 fixés à la structue de fond du four ne sont pas exactement verticaux, il est possible d'utiliser des éléments de structure de support tels qu'illustrés par la figure 5 (les éléments communs aux structures des figures 4 et 5 portent les mêmes références).

La structure de renfort de la figure 5 diffère de celle de la figure 4 en ce que les capuchons 26′ collés à la partie supérieure des pieds 22 ont une face supérieure en forme de calotte sphérique coopérant avec la face inférieure de forme analogue des noyaux 30′ pour former une rotule. Ainsi, un éventuel désalignement entre un axe d'un plot 24 et la verticale est automatiquement compensé par l'inclinaison du pied 22. En outre, les vis 32′ sont vissées non pas dans les capuchons 26′, mais dans les noyaux 30′. Pour le reste, la structure de la figure 5 est identique à celle de la figure 4.

De ce qui précède, il ressort que l'invention est remarquable, non seulement en raison de la présence du revêtement de pyrocarbone -qui permet de bénéficier des avantages (poids, encombrement, tenue mécanique) des matériaux composites thermostructuraux mais aussi en raison de la structure modulaire des constituants du dispositif de chargement -qui permet de ne nécessiter qu'un nombre réduit d'éléments différents avec les avantages qui en résultent pour la fabrication et le stockage-, et en raison de l'architecture de la structure de support -qui permet une adaptation aisée du dispositif de chargement aux fours existants-.

## Revendications

1. Dispositif de chargement pour soutenir des pièces à l'intérieur d'un four destiné au traitement thermique de pièces métalliques sous vide ou en atmosphère non oxydante, comprenant au moins une sole (12a, 12b, 12c) en matériau composite tharmostructural et revêtue par une couche, au moins sur sa surface destinée à être en contact avec les pièces, caractérisé en ce que ladite couche est en carbone pyrolytique ou pyrocarbone (13a).

2. Dispositif selon la revendication 1, caractérisé en ce que la couche de pyrocarbone (13a) a une épaisseur au moins égale à 25 microns.

3. Dispositif selon l'une quelconque des revendications 1 et 2, caractérisé en ce que ladite sole (12a, 12b, 12c) du dispositif de chargement est formée de plusieurs parties ou secteurs (14) juxtaposés.

4. Dispositif selon l'une quelconque des revendications 1 à 3, caractérisé en ce qu'il comprend au moins une sole de base (12a) prenant appui sur la structure de fond du four par des pieds (22) reliés entre eux par des barrettes (36) afin de constituer une structure de support rigide.

5. Dispositif selon la revendication 4, caractérisé en ce que les pieds (22) de la structure de support sont prévus pour être fixés à des plots (24) de la structure de fond du four et des moyens sont prévus permettant une inclinaison des pieds pour compenser des désalignements entre les axes des plots et la verticale.

6. Dispositif selon l'une quelconque des revendications 1 à 5, caractérisé en ce qu'il comprend plusieurs soles (12a, 12b, 12c) disposées à différents niveaux et espacées les unes des autres par des entretoises (16).

7. Dispositif selon la revendication 6, caractérisé en ce que les entretoises (16) sont en un matériau composite thermostructural et sont revêtues d'une couche de pyrocarbone.

8. Dispositif selon l'une quelconque des revendications 5 et 7, caractérisé en ce que les entretoises (16) sont formées par des éléments d'entretoise (17) mis bout à bout.

## Patentansprüche

1. Beschickungsvorrichtung zur Aufnahme von Werkstücken in einem Ofen, der zur thermischen Behandlung von metallischen Werkstücken in Vakuum oder einer nicht oxidierenden Atmosphäre bestimmt ist, bestehend aus wenigstens einem Träger (12a, 12b, 12c) aus thermostrukturellem Verbundmaterial, der mit einer Schicht wenigstens auf seiner Oberfläche überzogen ist, die dazu bestimmt ist, mit den Werkstücken in Kontakt zu treten,
**dadurch gekennzeichnet**, **daß**
die Schicht (13a) aus pyrolytischem Kohlenstoff oder Pyrokohlenstoff besteht.

2. Vorrichtung nach Anspruch 1,
**dadurch gekennzeichnet**, **daß**
die Pyrokohlenstoffschicht (13a) eine Dicke wenigstens gleich 25 Micron hat.

3. Vorrichtung nach Anspruch 1 und 2,
**dadurch gekennzeichnet, daß**
der Träger (12a, 12b, 12c) der Beschickungsvorrichtung aus mehreren nebeneinander angeordneten Teilen oder Abschnitten (14) gebildete ist.

4. Vorrichtung nach einem der Ansprüche 1 bis 3,
**gekennzeichnet durch**
wenigstens einen Bodenträger (12a), der auf der Bodenstruktur des Ofens durch Stützen (22) aufliegt, die miteinander durch Verbindungsstreben (36) verbunden sind, um einen starren Tragrahmen zu bilden.

5. Vorrichtung nach Anspruch 4,
**dadurch gekennzeichnet, daß**
die Stützen des Tragrahmens vorgesehen sind, um an Hülsen (24) der Bodenstruktur des Ofens befestigt zu werden, und daß Mittel vorgesehen sind, die eine Neigung der Stützen zum Ausgleich von Fehlausrichtungen zwischen den Achsen der Hülsen und der Vertikalen zu ermöglichen.

6. Vorrichtung nach einem der Ansprüche 1 bis 4,
**gekennzeichnet durch**
mehrere Träger (12, 12b, 12c), die in unterschiedlichen Hüllen und durch Querstreben (16) beabstandet angeordnet sind.

7. Vorrichtung nach Anspruch 6,
**dadurch gekennzeichnet, daß**
die Querstreben (16) aus einem thermostrukturellen Verbundmaterial bestehen und mit einer Pyrokohlenstoffschicht überzogen sind.

8. Vorrichtung nach Anspruch 5 oder 9,
**dadurch gekennzeichnet, daß**
die Querstreben (16) aus endweise angeordneten Querstrebenelementen (17) gebildet sind.

## Claims

1. Loading device for supporting workpieces inside an oven intended for heat-treating metal workpieces in a vacuum or in a non-oxidizing atmosphere, comprising at least one bed (12a, 12b, 12c) of thermostructural composite material, and coated with a layer, at least on its surface that is to come into contact with the workpieces, characterized in that said layer is in pyrolytic carbon or pyrocarbon (13a).

2. Device according to claim 1, characterized in that the thickness of the pyrocarbon layer (13a) is not less than 25 microns.

3. Device according to any one of claims 1 and 2, characterized in that said bed (12a, 12b, 12c) of the loading device is made up of a plurality of juxtaposed section portions (14).

4. Device according to any one of claims 1 to 3, characterized in that it comprises at least one base bed (12a) bearing against the bottom structure of the oven via legs (22) that are interconnected by bars (36) so as to constitute a rigid support structure.

5. Device according to claim 4, characterized in that the legs (22) of the support structure are designed to be fixed to studs (24) of the bottom structure of the oven and means are provided to enable the legs to tilt so as to compensate for any misalignment between the axes of the studs and the vertical.

6. Device according to any one of claims 1 to 5, characterized in that it comprises a plurality of beds (12a, 12b, 12c) disposed at different levels and spaced apart from one another by spacers (16).

7. Device according to claim 6, characterized in that the spacers (16) are made of thermostructural composite material and are coated with a layer of pyrocarbon.

8. Device according to any one of claims 5 or 7, characterized in that the spacers (16) are made up of spacer components (17) placed end-to-end.
